# FASCICULE DE BREVET EUROPEEN

(11) **EP 3 295 004 B1**
(45) Date de publication et mention de la délivrance du brevet: **27.02.2019**
(21) Numéro de dépôt: 16733132.1
(22) Date de dépôt: 14.04.2016
(51) Int. Cl.: F02B 75/04, F16H 55/12

(54) **PIÈCE EXCENTRIQUE POUR SYSTÈME DE VARIATION DU TAUX DE COMPRESSION D'UN MOTEUR THERMIQUE**
EXZENTERBAUTEIL FÜR EIN SYSTEM ZUR VERÄNDERUNG DES KOMPRESSIONSVERHÄLTNISSES EINER BRENNKRAFTMASCHINE
ECCENTRIC COMPONENT FOR A SYSTEM FOR VARYING THE COMPRESSION RATIO OF A COMBUSTION ENGINE

(30) Priorité: 11.05.2015 FR 1554175
(43) Date de publication de la demande: 21.03.2018
(73) Titulaire: PSA AUTOMOBILES S.A., 78300 Poissy (FR); Gomecsys B.V., 1411 AR Naarden (NL)
(72) Inventeur: BERGER, Julien, 75019 Paris (FR); POGAM, Matthieu, 78400 Chatou (FR); DE GOOIJER, Lambertus Hendrick, 1401 EP Bussum (NL); WAGENAAR, Sander, 1274 GR Huizen (NL); WAGENVOORT, Willem-Constant, 1273 RG Huizen (NL); BONNET, Vincent, 92500 Rueil Malmaison (FR)
(74) Mandataire: Bourguignon, Eric Pascal Jean
(86) Numéro de dépôt international: PCT/FR2016/050871
(87) Numéro de publication internationale: WO 2016/181046

(56) Documents cités:
- EP-A1- 1 624 204
- WO-A1-2013/110700
- CN-U- 202 628 727
- DE-A1- 2 308 000
- DE-A1- 4 415 100

## Description

La présente invention porte sur une pièce excentrique pour système de variation du taux de compression d'un moteur thermique.

Le document EP12152309.6 (EP2620614A1) enseigne la réalisation d'un système de variation du taux de compression en fonction des conditions de fonctionnement du moteur. Ce système de variation du taux de compression comporte notamment un ensemble de pièces excentriques montées sur les manetons du vilebrequin de manière à coopérer chacune avec une extrémité de bielle.

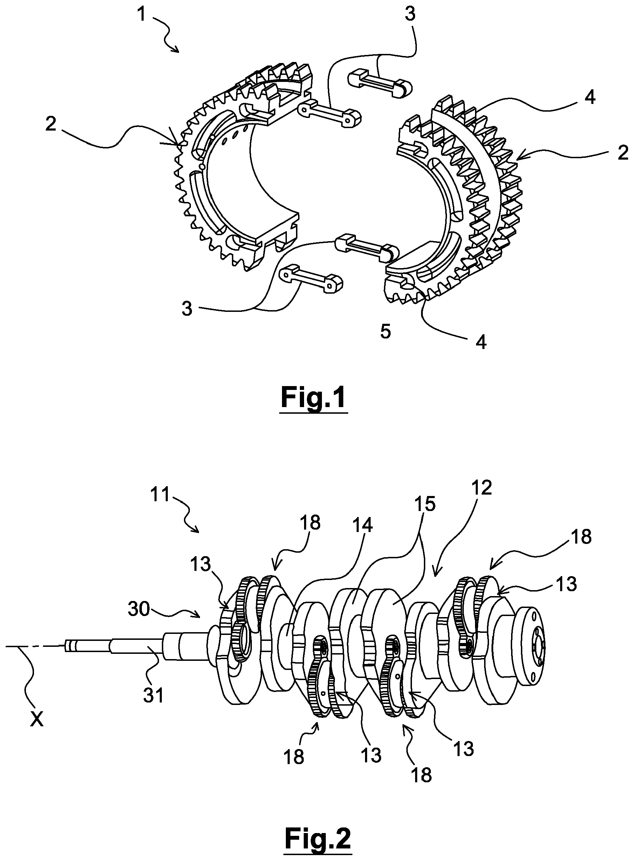

Comme cela est illustré par la figure 1, les pièces excentriques 1 sont scindées en deux demi-coquilles 2 pour permettre leur assemblage sur un vilebrequin monobloc. A cet effet, les demi-coquilles 2 sont assemblées sur le vilebrequin par emmanchement d'éléments de verrouillage 3 à l'intérieur de logements 4 ménagés dans les demi-coquilles 2. Dans une telle liaison, les plans d'appui des pièces mâles (correspondant aux têtes des éléments 3) et des pièces femelles (correspondant aux logements 4) possèdent des angles d'inclinaisons latéraux respectifs, de telle façon que plus la partie mâle est profonde dans la partie femelle, plus il y a de force de liaison entre les demi-coquilles 2.

L'invention vise à améliorer un tel dispositif en proposant une pièce excentrique pour système de variation du taux de compression d'un moteur à combustion interne selon la revendication 1.

L'invention permet ainsi d'assurer un positionnement axial et radial des deux demi-coquilles l'une par rapport à l'autre avant et après l'assemblage, via un centrage assuré par la mise en coopération des faces de contact des deux demi-coquilles et/ou du dispositif d'indexage. On autorise en outre l'extraction de l'élément de verrouillage par insertion d'une vis à l'intérieur de l'alésage correspondant.

Selon une réalisation, ledit dispositif d'indexage comporte au moins un pion destiné à coopérer avec des creux correspondants réalisés dans lesdites faces de contact.

Selon une réalisation, lesdites irrégularités sont constituées par des micro-irrégularités issues d'une cassure dudit corps de ladite pièce excentrique pour obtenir lesdites deux demi-coquilles. Une telle configuration permet d'éviter ainsi le recours à des plots d'indexage. En outre, les irrégularités permettent d'améliorer la résistance aux pics de charges observables lors des phases d'explosion du moteur thermique.

Selon une réalisation, lesdites irrégularités sont constituées par des formes usinées réalisées dans lesdites faces de contact.

Selon une réalisation, lesdites irrégularités présentent des formes de vague ou en triangle complémentaires.

Selon une réalisation, uniquement la partie dudit alésage réalisée dans ledit élément de verrouillage est taraudée.

Selon une réalisation, au moins une ouverture débouchant d'une part dans ladite cavité et d'autre part dans un espace entre lesdites deux couronnes dentées est réalisée dans une demi-coquille dudit corps. On autorise ainsi le démontage de l'élément de verrouillage en permettant l'insertion d'un poinçon par l'arrière de la cavité.

Selon une réalisation, ledit élément de verrouillage est configuré pour fonctionner dans une zone de déformation plastique.

Selon une réalisation, ledit élément de verrouillage comporte une portion centrale et deux têtes d'extrémité s'étendant de part et d'autre de la portion centrale.

L'invention a également pour objet un moteur à combustion interne de véhicule automobile caractérisé en ce que ledit moteur comporte:
- un vilebrequin, et
- un système de variation d'un taux de compression dudit moteur comportant au moins une pièce excentrique telle que précédemment définie montée sur un maneton dudit vilebrequin.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est une vue en perspective éclatée d'une pièce excentrique selon l'état de la technique;

La figure 2 est une vue en perspective illustrant l'intégration du système de variation de taux de compression d'un moteur thermique selon la présente invention suivant toute la longueur du vilebrequin;

La figure 3 est une vue en perspective du système de variation de taux de compression d'un moteur thermique selon la présente invention sans le vilebrequin;

La figure 4 est une vue en perspective éclatée d'une pièce excentrique selon la présente invention;

La figure 5 est une vue détaillée de l'état de surface des faces de contact des deux demi-coquilles de la pièce excentrique selon l'invention;

La figure 6a est une vue en coupe de la pièce excentrique selon l'invention illustrant un premier mode de réalisation d'un système de démontage des éléments de verrouillage;

La figure 6b est une vue de détail de la forme de l'alésage réalisé dans l'élément de verrouillage et dans la demi-coquille correspondante pour la mise en oeuvre du premier mode de réalisation du système de démontage;

La figure 7 est une vue de côté de la pièce excentrique selon l'invention illustrant un deuxième mode de réalisation du système de démontage des éléments de verrouillage.

Sur les figures 2 à 7, les éléments identiques, similaires, ou analogues, conservent la même référence d'une figure à l'autre.

La figure 2 montre une vue en perspective d'un système 11 de variation du taux de compression intégré dans un vilebrequin 12. Le système 11 permet de faire fonctionner un moteur à combustion interne à un taux de compression élevé dans des conditions de faible charge afin d'améliorer son rendement. Dans des conditions de fonctionnement à fortes charges, le taux de compression peut être diminué afin de réduire les risques d'auto-allumage du mélange.

Plus précisément, le vilebrequin 12 du moteur d'axe X est destiné à être monté rotatif sur un carter du moteur par l'intermédiaire de paliers. Le vilebrequin 12 comporte une pluralité de manetons 13, et de tourillons 14 séparés par des flasques 15 s'étendant sensiblement perpendiculairement par rapport à l'axe X.

Le vilebrequin 12 présente en outre une extrémité avant destinée à être liée en rotation avec une poulie. Un volant d'inertie (non représenté) est lié en rotation à l'extrémité arrière du vilebrequin 12.

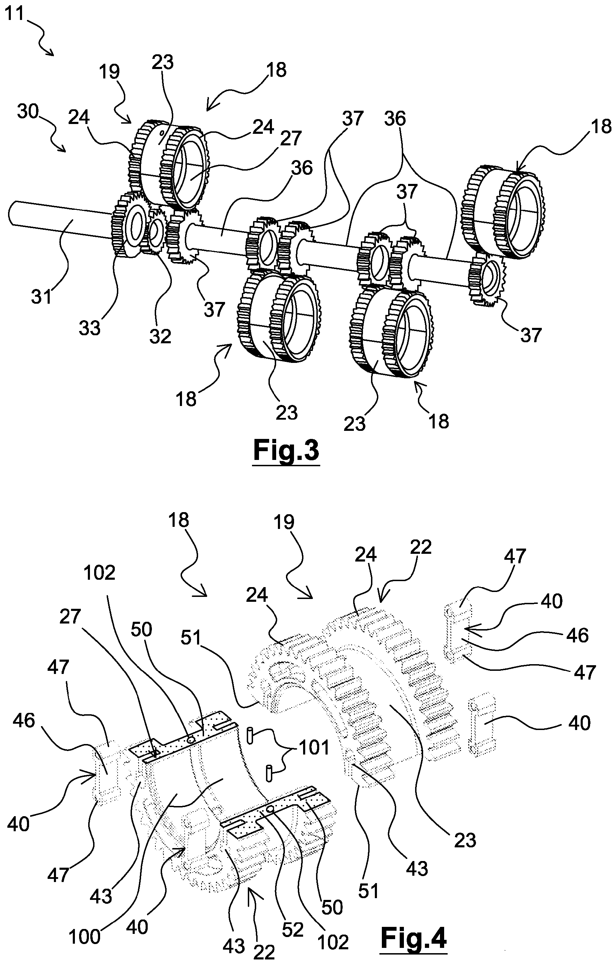

Des pièces excentriques 18 sont montées de manière rotative sur les manetons 13. Comme cela est mieux visible sur les figures 3 et 4, chaque pièce excentrique 18 comporte un corps 19 réalisé à partir de deux demi-coquilles 22 assemblées entre elles. Le corps 19 comprend une face externe 23 excentrique et deux couronnes dentées 24 positionnées de part et d'autre de la face excentrique 23 et concentriques de la face interne 27. La face externe 23 excentrique est destinée à coopérer avec une grande extrémité d'une bielle, laquelle présente en outre une petite extrémité liée en rotation avec un piston du moteur thermique.

De préférence, des coussinets 100 sont destinés à être monté entre une face interne 27 du corps 19 et une périphérie externe du maneton 13 pour former un palier hydrodynamique. La face interne 27 et les faces des coussinets 100 présentent un axe sensiblement confondu avec l'axe du maneton 13, tandis que la face externe 23 est excentrique par rapport à la face interne 27 et donc par rapport au maneton 13.

Par ailleurs, un système de commande 30 de la position angulaire des pièces excentriques 18 comporte un arbre d'actionnement 31 et une cascade de pignons constituée par un pignon d'actionnement 32 monté sur l'arbre d'actionnement 31, et un pignon intermédiaire 33, dit satellite, pour inverser le sens de rotation, engrenant d'une part avec le pignon d'actionnement 32 et d'autre part avec une couronne dentée 24 de la pièce excentrique 18 correspondante (cf. figure 3).

En fonctionnement et lorsque l'arbre d'actionnement 31 est fixe en rotation par rapport au bâti, le système 30 présente une configuration de taux de compression fixe. En transitoire de taux, la position angulaire de la pièce excentrique 18 située du côté de la poulie est pilotée par la position angulaire de l'arbre d'actionnement 31 pour ainsi transiter vers un nouveau point de taux de compression. A cet effet, l'arbre d'actionnement 31 peut être actionné par exemple au moyen d'un engrenage à roue et vis sans fin, ou tout autre moyen de déplacement adapté à l'application.

En outre, à travers les tourillons 14 du vilebrequin 12, des arbres 36 et des pignons 37, dits de transfert, transmettent la même cinématique de la pièce excentrique 18 située du côté de l'arbre d'actionnement 31 de proche en proche sur toutes les autres pièces excentriques 18 du vilebrequin 12. A cette fin, les pignons 37 montés sur les arbres de transfert 36 engrènent avec une couronne 24 d'une pièce excentrique 18 amont et une couronne 24 d'une pièce excentrique 18 aval correspondante.

En l'occurrence, comme on peut le voir clairement sur la figure 4, chaque demi-coquille 22 présente la forme d'un demi-anneau comportant une portion correspondante de la face excentrique 23 et une portion de chacune des deux couronnes dentées 24. Ces demi-coquilles 22 sont destinées à venir se plaquer chacune sensiblement sur la moitié de la circonférence du palier hydrodynamique formé par les coussinets 100 internes d'un maneton 13.

Afin d'assurer le maintien des demi-coquilles 22 autour du maneton 13, la pièce 18 comporte des éléments de verrouillage 40, ici au nombre de quatre, emmanchés chacun à l'intérieur d'une cavité 43 correspondante au niveau d'une zone de contact entre les deux demi-coquilles 22. Chaque cavité 43 est réalisée en partie dans chaque demi-coquille 22.

Chaque élément de verrouillage 40 comporte une portion centrale 46 et deux têtes d'extrémité 47 s'étendant de part et d'autre de la portion centrale 46. La portion centrale 46 présente une forme sensiblement parallélépipédique avec des faces planes. Chaque élément 40 présente ainsi globalement une forme dite en "os de chien".

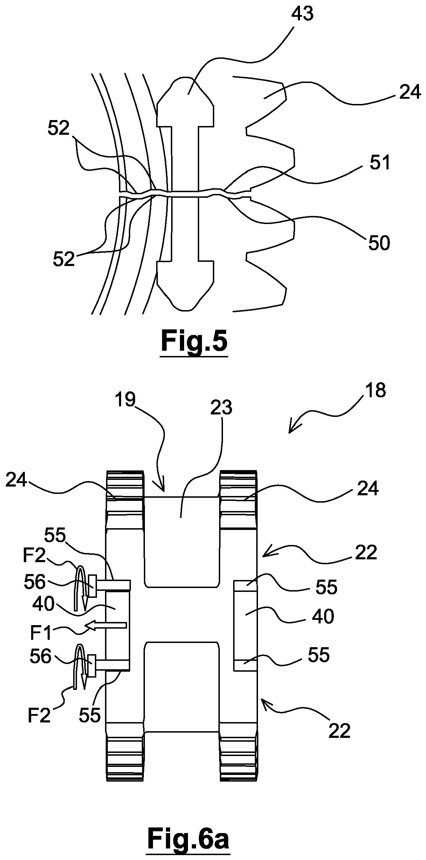

En outre, comme cela est illustré par la figure 5, les faces de contact 50, 51 entre les deux demi-coquilles 22 situées au niveau des extrémités de chaque demi-coquille 22 présentent des irrégularités 52 de relief de forme complémentaire. Ainsi, des irrégularités faisant saillie sur une face de contact 50, 51 d'une des demi-coquilles 22 coopèrent avec des creux correspondants de la face de contact 50, 51 de l'autre demi-coquille 22. Les irrégularités 52 s'étendent sur au moins 50% des faces de contact 50, 51 entre les demi-coquilles 22, et de préférence sensiblement sur la totalité des faces de contact 50, 51.

L'invention permet ainsi d'assurer un positionnement sous contrôle des deux demi-coquilles 22 l'une par rapport à l'autre avant l'assemblage, via un centrage assuré par la mise en coopération des faces de contact 50, 51 des deux demi-coquilles 22. En outre, les irrégularités 52 permettent d'améliorer la résistance aux pics de charges observables lors des phases d'explosion du moteur thermique.

Les irrégularités 52 sont constituées par exemple par des micro-irrégularités issues d'une cassure du corps 19 de la pièce excentrique 18 pour obtenir les deux demi-coquilles 22. Alternativement, les irrégularités 52 sont constituées par des formes usinées réalisées dans les faces de contact 50, 51. Dans ce cas, les irrégularités 52 pourront par exemple présenter des formes de vague ou des formes en triangle complémentaires. Ces formes de vagues ou de triangle peuvent être réalisées par exemple par découpe fil. Dans ce cas, la première ébauche des dentures sera réalisée pour prendre en compte le retrait de matière de la découpe. De la même manière, l'ébauche des cavités 43 sera légèrement plus long pour prendre en compte le retrait de matière de la découpe.

Alternativement, les faces de contact 50, 51 des demi-coquilles 22 sont planes et centrées l'une par rapport à l'autre à l'aide d'un dispositif d'indexage comportant des pions 101 destinés à coopérer avec des creux 102 correspondants ménagés dans les faces de contact 50, 51 des demi-coquilles 22 (cf. figure 4). En variante, le dispositif d'indexage est utilisé en complément des irrégularités 52 réalisées dans les faces de contact 50, 51.

Afin de réaliser la pièce excentrique 18, le corps 19 est fracturé pour obtenir les deux demi-coquilles 22. Alternativement, les demi-coquilles 22 formant le corps 19 sont obtenues par un procédé d'usinage.

Les demi-coquilles 22 sont ensuite assemblées entre elles au moyen des éléments de verrouillage 40. Afin de compenser les déformations liées aux contraintes mécaniques d'assemblage générées par l'insertion des éléments de verrouillage 40 dans les cavités 43 correspondantes, le diamètre interne, le diamètre externe, et la portion des dents situées au niveau des cavités 43 sont rectifiés par usinage. Un procédé alternatif consiste à assembler les pièces mâles avant les usinages de rectification de manière à prendre en compte la déformation des demi-coquilles 22 induite par l'assemblage.

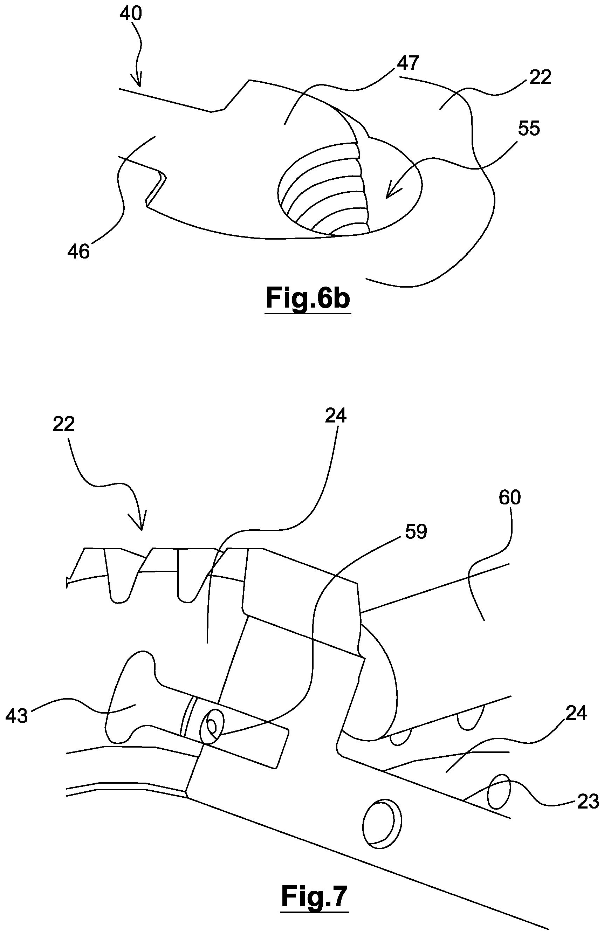

Une fois la rectification d'usinage réalisée, les demi-coquilles 22 sont démontées. A cet effet, dans un premier mode de réalisation illustré sur les figures 6a et 6b, on prévoit deux alésages 55 au niveau des extrémités 47 de chaque élément de verrouillage 40. Chaque alésage 55 est réalisé en partie dans une tête 47 de l'élément de verrouillage 40 et en partie dans la demi-coquille 22 correspondante. Chaque alésage 55 est borgne par rapport à la demi-coquille 22, c'est-à-dire qu'il est fermé axialement par le fond d'une cavité 43, et s'étend axialement suivant toute l'épaisseur de l'élément de verrouillage 40. Comme visible sur la figure 6b, uniquement la partie de l'alésage 55 réalisée dans l'élément de verrouillage 40 est taraudée.

On autorise ainsi le démontage de l'élément de verrouillage 40 par l'insertion d'une vis 56 à l'intérieur de chaque alésage 55 qui engendre l'extraction suivant la flèche F1 de l'élément de verrouillage 40 lors de la phase de vissage suivant la flèche F2 se produisant après l'entrée en butée d'une extrémité de la vis 56 contre le fond de la cavité 43. De préférence, les vis 56 seront insérées dans les alésages 55 des deux extrémités et vissées simultanément.

En variante, on prévoit un seul alésage 55 pour chaque élément de verrouillage 40. En variante, les alésages borgnes 55 sont réalisés en partie dans l'élément de verrouillage 40 dans une zone autre que la tête d'extrémité 47.

Dans un autre mode de réalisation illustré par la figure 7, une ouverture 59 débouchant d'une part dans la cavité 43 et d'autre part dans l'espace entre les deux couronnes 24 est réalisée dans le corps 19 de la pièce excentrique 18. On autorise ainsi le démontage de l'élément de verrouillage 40 en permettant l'insertion d'un poinçon 60 par l'arrière de la cavité 43, c'est-à-dire en faisant passer le poinçon 60 entre les deux couronnes 24, de manière à dégager l'élément 40 de la cavité 43.

Une fois rectifiée et démontée, la pièce excentrique 18 est ensuite assemblée sur le maneton 13 correspondant via les coussinets 100. De préférence, on remplace les éléments de verrouillage 40 utilisés lors de la phase de rectification d'usinage par de nouveaux éléments de verrouillage 40. Les éléments de verrouillage 40 pourront ainsi être utilisés dans leur zone de déformation plastique. Cela permet de réduire les tolérances géométriques de production. En effet, le ratio entre l'effort appliqué entre les deux demi-coquilles 22 est moins sensible à l'allongement de la pièce mâle dans cette zone de fonctionnement.

Par "demi-coquilles", on entend des coquilles de forme complémentaire qui, lorsqu'elles sont assemblées, s'étendent suivant un angle de 360 degrés. Chaque demi-coquille 22 s'étend en l'occurrence sensiblement sur 180 degrés. Toutefois, en variante, chaque demi-coquille 22 pourra s'étendre sur un angle supérieur ou inférieur à 180 degrés.

## Revendications

1. Pièce excentrique (18) pour système (11) de variation du taux de compression d'un moteur à combustion interne comportant:
- un corps (19) réalisé à partir de deux demi-coquilles (22) assemblées entre elles, ledit corps (19) comprenant une face excentrique (23) par rapport à une face interne (27) dudit corps (19), et deux couronnes dentées (24) positionnées de part et d'autre de ladite face excentrique (23) et concentriques de ladite face interne (27),
et dans laquelle les faces de contact (50, 51) sont centrées l'une par rapport à l'autre par l'intermédiaire d'un dispositif d'indexage (101, 102) et/ou d'irrégularités de relief (52) de forme complémentaire ménagées dans lesdites faces de contact (50, 51),
**caractérisé en ce que** ladite pièce (18) comporte en outre au moins un élément de verrouillage (40) emmanché à l'intérieur d'une cavité (43) correspondante réalisée en partie dans chaque demi-coquille (22), au moins un alésage (55) étant réalisé en partie dans ledit élément de verrouillage (40) et en partie dans une demi-coquille (22) correspondante.

2. Pièce excentrique selon la revendication 1, **caractérisé en ce que** ledit dispositif d'indexage comporte au moins un pion (101) destiné à coopérer avec des creux (102) correspondants réalisés dans lesdites faces de contact (50, 51).

3. Pièce excentrique selon la revendication 1 ou 2, **caractérisée en ce que** lesdites irrégularités (52) sont constituées par des micro-irrégularités issues d'une cassure dudit corps (19) de ladite pièce excentrique (18) pour obtenir lesdites deux demi-coquilles (22).

4. Pièce excentrique selon la revendication 1 ou 2, **caractérisée en ce que** lesdites irrégularités (52) sont constituées par des formes usinées réalisées dans lesdites faces de contact (50, 51).

5. Pièce excentrique selon la revendication 4, **caractérisée en ce que** lesdites irrégularités (52) présentent des formes de vague ou en triangle complémentaires.

6. Pièce excentrique selon la revendication 1, **caractérisé en ce que** uniquement la partie dudit alésage (55) réalisée dans ledit élément de verrouillage (40) est taraudée.

7. Pièce excentrique selon la revendication 1, **caractérisée en ce qu'**au moins une ouverture (59) débouchant d'une part dans ladite cavité (43) et d'autre part dans un espace entre lesdites deux couronnes dentées (24) est réalisée dans une demi-coquille (22) dudit corps (19).

8. Pièce excentrique selon l'une quelconque des revendications 1, 6 ou 7, **caractérisée en ce que** ledit élément de verrouillage (40) est configuré pour fonctionner dans une zone de déformation plastique.

9. Pièce excentrique selon l'une quelconque des revendications 1, 6 à 8, **caractérisée en ce que** ledit élément de verrouillage (40) comporte une portion centrale (46) et deux têtes d'extrémité (47) s'étendant de part et d'autre de la portion centrale.

10. Moteur à combustion interne de véhicule automobile **caractérisé en ce que** ledit moteur comporte:
- un vilebrequin (12), et
- un système (11) de variation d'un taux de compression dudit moteur comportant au moins une pièce excentrique (18) telle que définie selon l'une quelconque des revendications précédentes montée sur un maneton (13) dudit vilebrequin (12).

## Patentansprüche

1. Exzenterbauteil (18) für System (11) zur Veränderung des Kompressionsverhältnisses einer Brennkraftmaschine, das Folgendes umfasst:
- einen Körper (19), der ausgehend von zwei Halbschalen (22) hergestellt ist, die miteinander zusammengefügt werden, wobei der Körper (19) eine exzentrische Fläche (23) bezüglich einer Innenfläche (27) des Körpers (19) umfasst, und zwei Zahnkränze (24), die auf jeweils einer Seite der Exzenterfläche (23) positioniert sind und zu der Innenfläche (27) konzentrisch sind,
und wobei die Kontaktflächen (50, 51) zueinander mittels einer Positionierungsvorrichtung (101, 102) und/oder Reliefunregelmäßigkeiten (52) mit komplementärer Form, die in den Kontaktflächen (50, 51) angelegt sind, zentriert sind,
**dadurch gekennzeichnet, dass** das Teil (18) außerdem mindestens ein Verriegelungselement (40), das in dem Inneren eines entsprechenden Hohlraums (43), der zum Teil in jeder Halbschale (22) hergestellt ist, umfasst, wobei mindestens eine Bohrung (55) zum Teil in dem Verriegelungselement (40) und zum Teil in einer entsprechenden Halbschale (22) hergestellt ist.

2. Exzenterbauteil nach Anspruch 1, **dadurch gekennzeichnet, dass** die Positionierungsvorrichtung mindestens einen Dorn (101) umfasst, der dazu bestimmt ist, mit entsprechenden Vertiefungen (102), die in den Kontaktflächen (50, 51) hergestellt sind, zusammenzuwirken.

3. Exzenterbauteil nach Anspruch 1 oder 2, **dadurch gekennzeichnet, dass** die Unregelmäßigkeiten (52) aus Mikrounregelmäßigkeiten bestehen, die aus einem Bruch des Körpers (19) des Exzenterbauteils (18) hervorgehen, um die zwei Halbschalen (22) zu erhalten.

4. Exzenterbauteil nach Anspruch 1 oder 2, **dadurch gekennzeichnet, dass** die Unregelmäßigkeiten (52) aus bearbeiteten Formen bestehen, die in den Kontaktflächen (50, 51) hergestellt sind.

5. Exzenterbauteil nach Anspruch 4, **dadurch gekennzeichnet, dass** die Unregelmäßigkeiten (52) komplementäre Formen von Wellen oder als Dreieck aufweisen.

6. Exzenterbauteil nach Anspruch 1, **dadurch gekennzeichnet, dass** nur der Teil der Bohrung (55), der in dem Verriegelungselement (40) hergestellt ist, ein Innengewinde aufweist.

7. Exzenterbauteil nach Anspruch 1, **dadurch gekennzeichnet, dass** mindestens eine Öffnung (59), die einerseits in den Hohlraum (43) und andererseits in den Raum zwischen den zwei Zahnkränzen (24) mündet, in einer Halbschale (22) des Körpers (19) hergestellt ist.

8. Exzenterbauteil nach einem der Ansprüche 1, 6 oder 7, **dadurch gekennzeichnet, dass** das Verriegelungselement (40) konfiguriert ist, um in einer plastischen Verformungszone zu funktionieren.

9. Exzenterbauteil nach einem der Ansprüche 1, 6 bis 8, **dadurch gekennzeichnet, dass** das Verriegelungselement (40) einen zentralen Abschnitt (46) und zwei Endköpfe (47), die sich jeweils auf einer Seite des zentralen Abschnitts erstrecken, umfasst.

10. Kraftfahrzeug-Brennkraftmaschine, **dadurch gekennzeichnet, dass** der Motor Folgendes umfasst:
- eine Kurbelwelle (12), und
- ein System (11) zur Veränderung eines Kompressionsverhältnisses der Maschine, das mindestens ein Exzenterbauteil (18), wie es nach einem der vorstehenden Ansprüche definiert ist, auf einem Kurbelzapfen (13) der Kurbelwelle (12) montiert umfasst.

## Claims

1. An eccentric component (18) for a system (11) for varying the compression ratio of an internal combustion engine comprising:
- a body (19) made from two half-shells (22) assembled with one another, said body (19) including a face (23) that is eccentric with respect to an internal face (27) of said body (19), and two ring gears (24) positioned on either side of said eccentric face (23) and concentric to said internal face (27),
and in which the contact faces (50, 51) are centred one with respect to the other by means of an indexing device (101, 102) and/or of irregularities in relief (52) of complementary shape arranged in said contact faces (50, 51),
**characterized in that** said component (18) further comprises at least one locking element (40) fitted in the interior of a corresponding cavity (43) formed in part in each half-shell (22), at least one bore (55) being formed in part in said locking element (40) and in part in a corresponding half-shell (22).

2. The eccentric component according to Claim 1, **characterized in that** said indexing device comprises at least one pin (101) intended to cooperate with corresponding recesses (102) formed in said contact faces (50, 51).

3. The eccentric component according to Claim 1 or 2, **characterized in that** said irregularities (52) are constituted by micro-irregularities resulting from a break of said body (19) of said eccentric component (18) so as to obtain said two half-shells (22).

4. The eccentric component according to Claim 1 or 2, **characterized in that** said irregularities (52) are constituted by machined shapes formed in said contact faces (50, 51).

5. The eccentric component according to Claim 4, **characterized in that** said irregularities (52) have complementary wave or triangle shapes.

6. The eccentric component according to Claim 1, **characterized in that** solely the part of said bore (55) formed in said locking element (40) is tapped.

7. The eccentric component according to Claim 1, **characterized in that** at least one opening (59) emerging on the one hand in said cavity (43) and on the other hand in a space between said two ring gears (24) is formed in a half-shell (22) of said body (19).

8. The eccentric component according to any one of Claims 1, 6 or 7, **characterized in that** said locking element (40) is configured so as to function in a zone of plastic deformation.

9. The eccentric component according to any one of Claims 1, 6 to 8, **characterized in that** said locking element (40) comprises a central portion (46) and two end heads (47) extending on either side of the central portion.

10. An internal combustion engine of a motor vehicle, **characterized in that** said engine comprises:
- a crankshaft (12), and
- a system (11) for varying a compression ratio of said engine comprising at least one eccentric component (18) as defined according to any one of the preceding claims, mounted on a crank pin (13) of said crankshaft (12).
